# EUROPEAN PATENT SPECIFICATION

(11) **EP 2 486 377 B1**
(45) Date of publication and mention of the grant of the patent: **07.05.2014**
(21) Application number: 10765596.1
(22) Date of filing: 23.09.2010
(51) Int. Cl.: G01H 1/00

(54) **ROTOR BEHAVIOUR DETERMINATION**
BESTIMMUNG DES VERHALTENS EINES ROTORS
DÉTERMINATION DU COMPORTEMENT D'UN ROTOR

(30) Priority: 09.10.2009 GB 0917634
(43) Date of publication of application: 15.08.2012
(73) Proprietor: Rolls-Royce Plc., London SW1E 6AT (GB)
(72) Inventor: KURT-ELLI, Hilmi, Derby, Derbyshire DE24 8BJ (GB)
(74) Representative: Roberts, Nicholas John
(86) International application number: PCT/EP2010/064028
(87) International publication number: WO 2011/042312

(56) References cited:
- EP-A1- 1 645 720
- EP-A2- 1 528 223
- US-A1- 2004 243 332
- HANSON, DAVID: "Operational modal analysis and model updating with a cyclostationary input"[Online] 31 December 2006 (2006-12-31), pages I-206, XP002613048 Mechanical & Manufacturing Engineering, Faculty of Engineering, University of New South Wales. School of Mechanical and Manufacturing Engineering Retrieved from the Internet: URL:http://unsworks.unsw.edu.au/vital/acce ss/manager/Repository/unsworks:1571> [retrieved on 2010-12-07]
- ALEXEY I. BOROVKOVIGOR, A. ARTAMONOV: "3D Finite Element Modeling and Vibration Analysis of Gas Turbine Structural Elements"[Online] 31 December 2004 (2004-12-31), XP002613049 Computational Mechanics Laboratory,St.Petersburg State Polytechnical University, Russia Retrieved from the Internet: URL:http://www.ansys.com/events/proceeding s/2004/PAPERS/114.PDF> [retrieved on 2010-12-07]

## Description

The present invention relates to determination of operational characteristics of a rotor and more particularly, although not exclusively, to the determination of vibration characteristics for a bladed rotor.

It is a well established problem that rotors can be subject to vibration which can impact on the rotor performance. Vibrations of this kind are particularly problematic for bladed rotors for gas turbine engines but may also affect other types of rotor assembly for which the aerodynamic or hydrodynamic performance of the rotor is crucial to operational efficiency. For many types of rotor, vibration characteristics also significantly impact on the operational life of the rotor. Accordingly it is generally important to identify and prevent detrimental vibration in rotating components.

However for rotors comprising multiple component parts, such as bladed assemblies or the like, it can prove problematic to determine which individual components are contributing to the vibrational characteristics of the rotor and to what extent. This is, at least in part, due to the difficulty in exciting one blade in an operational context without also exciting the other blades of the assembly. Vibration may also be transmitted throughout an assembly and so the interaction between different component parts serves to conceal the reasons for the resulting complex assembly vibration.

Conventional methods of determining vibrational characteristics typically rely on physical measurements of the vibrational response of rotors under analysis which are used to compute the vibration properties of individual blades or sectors using a model. Whilst such conventional methods can provide a degree of confidence for a purely theoretical scenario of a tuned assembly in which all blades or sectors are identical, significant problems can be experienced when real scenarios are analysed, in which small physical differences often exist between the blades. Such small differences in the properties of individual blades can cause significant differences in the assembly behaviour of the system when it is vibrating.

Furthermore there exist problems in modelling rotors to determine vibrational response since noise assessment requires analysis of both the structural response of the blades themselves as well as analysis of the fluid dynamics surrounding the rotor.

Conventional methods require use of one tool - such as a finite element analysis (FEA) tool - for the structural analysis and a further tool - such as a computational fluid dynamics (CFD) tool - for the fluid analysis. Each tool is based on a set of mathematical models which approximate real behaviour and which introduce a degree of uncertainty as to the accuracy of the predicted behaviour. Thus, when results from one tool are fed as inputs into another tool, a compound uncertainty results which significantly impacts on the usefulness of the results.

One method of determining vibration characteristics for bladed disc systems is described in US 7,082,371 (Griffin et al), which proposes to use a reduced order mathematical model in connection with measured data to calculate how the individual blade properties may differ from a nominal model. The model effectively assumes that the narrow bandpass filtered response of the system would be dominated by a single family or type of response.

Under certain conditions, the system of US 7,081,371 may allow computation of how the dynamic property of each sector differs from the nominal properties of the tuned system design. However there are a number of assumptions implicit in such a mathematical model, which results in the accuracy of the system being questionable or unknown over a broad range of scenarios. Accordingly a significant amount of validation of the system is required against a broad range of physical test scenarios in order to ensure the reliability and efficacy of the underlying model.

Furthermore the model is based upon a fictitious discrepancy between sector properties for an ideal, tuned scenario and a real, mistuned case. The mismatch between such concepts and real rotor characteristics, presents issues with respect to physical measurement and corresponding validation of the model. Accordingly, detailed understanding of the physical operation of such a rotor and also the potential shortcomings of the underlying mathematical model are required for meaningful results to be generated.

It is an aim of the present invention to provide a method for determining vibration characteristics of a rotor for which the above-described problems are obviated or at least mitigated. It may be considered a further aim of the present invention to provide a system which is applicable to a relatively wide range of scenarios.

The invention has been derived from the realisation that computational modelling of a rotor allows unrealistic parameters to be applied. Such practice is generally avoided in the art since it results in a modelled rotor which deviates from its physical counterpart. However the inventor has determined that such parameters can be used to infer information on the relative contributions of individual components, such as blades, to the global response for the rotor.

According to one aspect of the present invention there is provided a method of analysing a vibration characteristic of a rotor having a plurality of components, the method comprising: generating a computational model of the rotor by discretization of the rotor geometry and assigning parameter values representative of a plurality of physical characteristics of the rotor; applying an artificial localised parameter value to each component of the rotor; calculating a vibration response of the rotor for said applied artificial parameters; and, comparing the vibration response of the rotor against a predetermined vibration response so as to determine artificial parameter values for each of the components which result in a calculated vibration response that matches the predetermined vibration response;
determining individual vibration characteristics of each component based upon the output component models and associated artificial parameters by constraining components or sections of the resulting updated rotor model or isolating a portion of the model representative of each component and constraining it as required and predicting the vibration response and/or characteristics thereof; and,
modifying one or more components of the rotor in dependence on the determined artificial parameter values, wherein the artificial localised parameter value applied to each component of the rotor is such that it departs from the physical characteristics of said rotor.

A substantial departure may be considered to be non-trivial or non-accidental. Preferably the artificial parameter value for a first component of the rotor differs from the artificial parameter for a second or further component of the rotor.

The artificial parameter value may be different for a plurality or all of said components.

The applying of an artificial localised parameter value may comprise applying or updating a total of five or less parameters. Such localised parameters are typically applied to each component. This approach significantly departs from a conventional updating technique, for which a significantly larger number of parameters would typically be updated for the whole model or else each whole component at once.

The artificial parameter may be applied to a specific location on each component. In one embodiment the artificial parameter is applied to a specified point or element of each component in the discretized rotor geometry. The specific location may be towards a radially outer edge or tip region of each component.

The artificial parameter may comprise a mass such as a lumped parameter mass

In one embodiment, the rotor comprises a bladed rotor assembly. The components may comprise rotor blades.

According to one particular embodiment the determination of artificial parameter values comprises updating the artificial parameter values. The updating of the artificial parameter values may be based upon the predetermined vibration response. The determination of the artificial parameter values may comprise determining a discrepancy between the calculated vibration response and the predetermined vibration response. The determination of the artificial parameter values may comprise updating the artificial parameter values based upon said discrepancy. The iterated updating of the artificial parameter value may comprise altering the magnitude of the parameter feature.

In one embodiment, iteration of any or any combination of the following may be undertaken to determine final artificial parameter values: calculating a vibration response of the rotor for said applied artificial parameters; comparing the vibration response of the rotor against a predetermined vibration response; and updating the artificial parameter values. Such actions may be undertaken and/or iterated in the sequence described above.

The method may comprise computing one or more sensitivities of the calculated vibration response to the artificial parameter values or variations therein. The method may comprise computing one or more sensitivities of the correlation between the calculated vibration response and the predetermined vibration response to the artificial parameter values. The sensitivity may be used to determine the degree to which the artificial parameters should be updated or further updated to achieve the predetermined vibration response.

One or more user-defined or predetermined thresholds may be used to determine a match between the calculated vibration response and the predetermined vibration response. A calculated vibration response may be considered to match the predetermined response, when it falls within said threshold.

In a preferred embodiment, the model of the rotor and/or individual components thereof including the determined artificial parameter values is output. The invention provides a method for determining the vibration properties of individual blades based upon the output individual component models including corresponding artificial parameter values.

In one embodiment, a nominal finite element model may be created, to which the artificial parameter values may be applied.

The predetermined vibration response may comprise a measured vibration response for the rotor. The method may include taking physical measurements of the vibration responses of a rotor. The geometry of the physical rotor may be used in the generation of the computational model. The updating of the parameter values may comprise iteratively adjusting parameter values and determining the response of the components or operational characteristic of the rotor for each iteration. The determined behaviour may be compared to predetermined measured response or other vibration response or characteristic data in order to determine the divergence there-from. A threshold divergence may be set and the parameter values may be iteratively adjusted until the determined behaviour differs from the predetermined behaviour by the threshold divergence or less.

According to one embodiment, the damping properties may be determined for any or any combination of each component, a plurality of components and/or the rotor. The component response or behaviour may be characterised by its damping properties.

According to a second aspect of the invention there is provided a system for determining a vibration characteristic of one or more individual components within a rotor assembly comprising a plurality of components.

One or more working embodiments of the present invention are described in further detail below by way of example with reference to the accompanying drawings, of which:
Figure 1 shows a three-dimensional view of a rotor for analysis according to one embodiment of the present invention;
Figure 2 shows a representation of a three-dimensional rotor model for analysis in accordance with the present invention;
Figure 3 shows a flowchart of basic steps undertaken according to one embodiment of the present invention; and,
Figure 4 shows a graphical display of calculated and predetermined vibration responses.

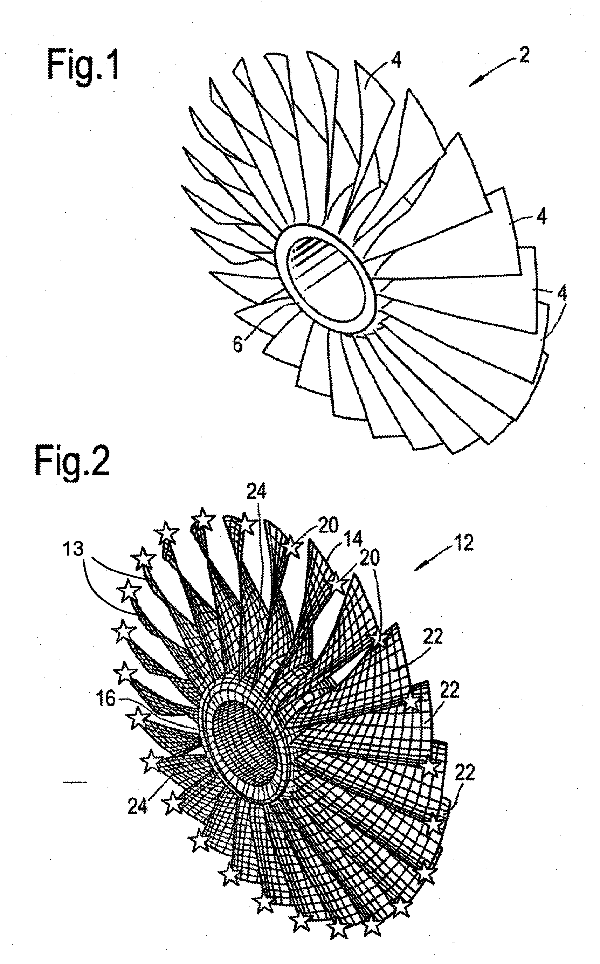

Embodiments of invention are described below in relation to a rotor in the form of a bladed disc assembly, such as that shown in figure 1, as may be found within gas turbine engines. Such components may be referred to in the art as a blisc, blisk or bling. The example of figure 1 shows a rotor in the form of a fan 2 having a plurality of blades 4 mounted to a disc or hub section 6 which is arranged to rotate with the blades in use. However the present invention may equally be applied to gas turbine engine compressors or turbines, or else rotors which are to be used for purposes other than within a gas turbine engine, such as pumps, compressors, fans, turbines or propellers associated with power generation, propulsion or other vehicular or industrial applications.

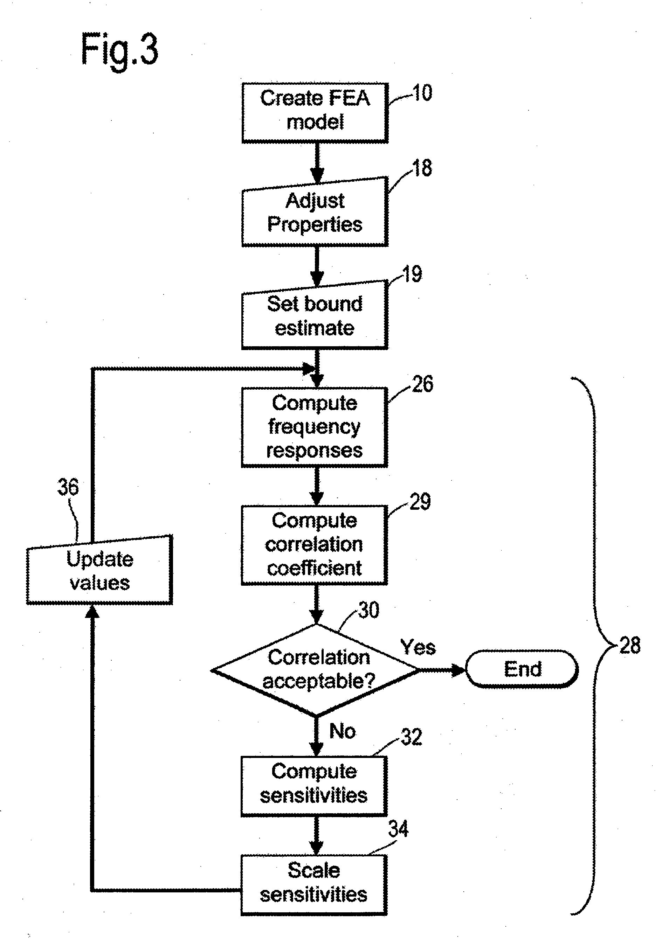

Turning to figure 3, a flowchart of the steps carried out according to one embodiment of the invention are shown and will be described in further detail below with reference to figures 1 and 2.

At step 10, a mathematical model 12 of the fan assembly 2 is generated using the finite element method. As will be understood to the skilled person, the creation of the model involves importing or generating the geometry of the fan assembly 2 within a Computer Aided Engineering (CAE) packages such as a Computer Aided Design (CAD) or so-called Finite Element Analysis (FEA) package.

The fan assembly geometry is discretized by application of a mesh 14 thereto. The mesh 14 defines a plurality of elements over the fan assembly geometry. The mesh may comprise elements of the same or differing geometric shapes dependent on the geometry and the nature of the behaviour to be captured. The size of the elements and hence the number of elements used within the model may be varied by an operator dependent on the scale of the behaviour to be captured. The element density may also be varied throughout the model such that more elements are located in areas of behavioural interest or complexity and fewer elements are arranged in areas which are less critical to the determination of the rotor operation. Whilst such principles in general are known in the art, the present invention allows such flexibility in the determination of individual blade characteristics in a rotor assembly and accordingly the nominal finite element model can be made as complex as is necessary.

Details of the meshing techniques will be known to the skilled person and modelling tools of this kind are commercially available and will not be described in further detail here for conciseness. These models will represent each blade in accordance with range of available information such as, by way of example only, the blade geometry, material modulus, density, temperature, etc. In real scenarios further material properties or characteristics as well as a set of boundary conditions may be required to determine the vibration response of a blade. Any such properties or characteristics may be input as model parameters by a user or looked up in a corresponding database of material properties.

The model 12 is representative of fan assembly 2 and accordingly has a plurality of blades 13 mounted about a common hub or disc portion 16.

The resulting computer model is referred to herein as a nominal model or nominal finite element model. This nominal model is used to numerically assess the vibration behaviour of the component in a conventional manner using a FEA package. The output of this assessment provides a nominal set of results which may be referred to as a nominal model response herein.

If the part of the structure which can in principle transmit vibration between blades 4 - in this example the hub region 6 - is sufficiently flexible, then the system behaviour can be very complicated with blade interactions being significant. The field of vibration describes this mistuned behaviour extensively. Below is described a method for computing the effective vibration properties of the individual blades from the system responses. The method is based on the general principle of applying artificial features to the assembly model in order to perturb the individual blade characteristics.

The nominal finite element model for each blade 13 is amended by addition of an artificial feature 20 as indicated in Figure 3. In this embodiment the model parameters are amended by addition of a lumped mass 20 located in the vicinity of the tip 22 of each blade 13. An initial estimate of the required lumped mass 20 is provided at step 19.

The individual blade alone characteristics may be defined as the blade characteristics which occur if a blade 13 is fully fixed at its root 24.

The lumped mass element 20 added to each blade 13 in the model is assigned a mass value such that the individual blade vibration characteristics are approximately equal to, or else very similar to, those of an actual physical blade were it to be fixed at the root.

Since added mass acts to lower the blade alone natural frequency, it is necessary to also artificially lower the overall blade density in order to ensure that a positive lumped parameter mass value can then shift the natural frequency to that which might prevail in the real component. This adjustment is made at step 18 in figure 3. In the practical scenarios modelled successfully to date, the blade density is typically reduced in the order of a few percent, such as between 1 and 10%.

In an alternative embodiment, in place of overall blade density, the blade modulus could be adjusted to similar effect.

It is to be noted that the method described herein refers to amendment of the model blade parameters by way of a single lumped parameter mass feature, but that it could alternatively be a lumped parameter spring element. In such an embodiment, corresponding adjustment on the overall blade moduli or density would be required as described above.

Also, for conciseness the method is described with only one parameter being used to perturb each blade but this could be achieved using a plurality parameters in combination. In trials to date, it has been found that the addition of a single parameter value is adequate for distinct mode families (such as for example for scenarios in which so-called first bending, first torsion and second torsion occurrence is readily discernable). However for examples where more complicated behaviour prevails and in which discrete mode families are less readily discernable, a number of artificial parameter updates may be required within the model for each blade to achieve the desired effect. Alternatively, one or a number of the finite element properties could be perturbed to achieve the same effect.

Only one localized parameter per blade (i.e. the lumped mass) is updated according to the present invention. The update of the blade density to lower the blade frequency is typically applied to the whole blade and thus is not localised. However in other embodiments, a small number of localised parameters such as two or three parameters may be updated at the same or different specific locations on each blade as required. In order to facilitate iterative convergence of the solution towards the correct artificial parameters, it is envisaged the typically less than five parameters would be updated.

An initial upper bound for the lumped mass estimate is made at 19. The finite element model is then analysed using a conventional FEA tool in order to determine the frequency response for the modelled assembly 12 at stage 26. An iterative solution for determining the lumped parameter mass values is sought by trialling values, making a finite element prediction of the behaviour and comparing this with the measured data available in respect of the behaviour. This is shown in figure 3 by iterative loop 28.

The available measured behaviour will usually be the forced frequency response function or a plot of the forced frequency response for the assembly as may be acquired in a laboratory. Alternatively, in the case of gas turbine engines in particular, the engine order response may be used which is conventionally measured for an engine.

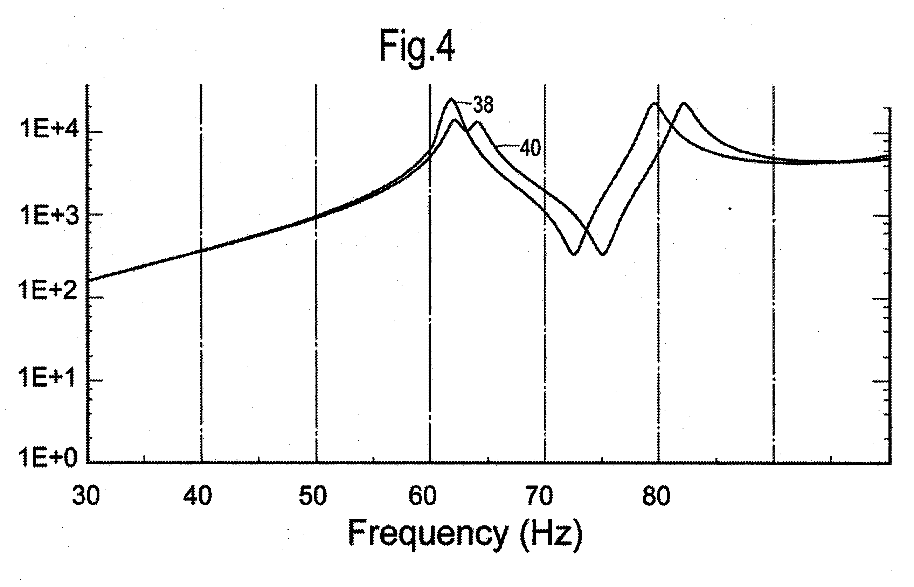

Figure 4 shows an exemplary plot of a predicted rotor response 38 and a predetermined rotor response, in the form of test data plot 40. In alternative embodiments, the test data may be replaced or supplemented with alternatively predicted response data using different methodologies which may or may not have been validated against test results. This exemplary plot represents the forced response of one of the blades as a function of frequency of excitation. Typically, the response from a number of blades (possibly all of the blades in the assembly) would be required and the correlation between the predicted and test data across the blade set considered. The discrepancy between the responses shown in figure 3 may be defined in terms of the maximum magnitude of discrepancy or an average discrepancy over the plot.

In order to guide the iterative trialling of varying magnitudes of parameter changes - in this example the lumped mass - a correlation measure is defined by way of a correlation coefficient. The correlation measure or coefficient is an indicator of the outcome of a comparison between predicted results of the model and measured results. The correlation coefficient may be given as a fraction or percentage discrepancy or the like. At 29 the correlation coefficient is determined for a given added mass value 20 which was set at step 19.

At 30, it is determined whether the correlation between the model response and the physical assembly response is acceptable. At this stage the correlation is checked against predetermined or user-defined criterion, such as a threshold value for the correlation coefficient. If the correlation is acceptable, the iterative process 28 ends and the model results are deemed acceptable.

If the correlation falls outside of the acceptance criteria, then a computation of the sensitivity of the correlation coefficient to variations in the parameter values which were set at 19 is carried out. This may be achieved by comparison of the results for one value of lumped mass parameter set against the results of the model using a different value set. The difference between these results gives an indication of the degree to which the lumped mass should be changed to achieve the desired output. A first iteration may require the results to be compared against a nominal model results for which no lumped mass parameter is added.

At 34, the sensitivities are scaled, at least in part to ensure numerical stability of process. The previously selected parameter values are then updated at 36 before recalculation of the model response at 26 with the updated values and repetition of stages 28 to 36 carried out as necessary. The updating stage 36 may comprise updating added mass values and/or any or any combination of density, moduli or any other parameters proposed above.

Whilst the current model updating strategy under investigation may involve some manual intervention to help convergence, it is envisaged that the process will typically be fully automated once robust iterative strategies have been determined for a broad range of scenarios. The model updating approach may be enhanced by weighting the sensitivities using a Bayesian approach. Also, instead of a model updating strategy, it may be possible to use an optimisation strategy to iteratively converge to the correct lumped parameter values. A combination of these and/or other iterative strategies may provide a more efficient approach to convergence.

In trial cases, the inventor has come to expect blade alone frequencies to be within a +/- 3% range of a nominal case value. Thus the stage 18 of adjusting the blade overall densities or moduli to lower frequencies may typically introduce a 3% or higher change in frequency, such that the nominal model (with a zero lumped mass value) has the highest natural frequency characteristic that may be expected. That is to say that the adjustment of the component properties should be sufficient to introduce a change in frequency that is greater than or equal to an expected discrepancy between nominal model blade alone frequencies and blade alone frequency values determined from physical measurements.

The upper bound mass value which could be the initial start value assigned to the lumped masses at the start of the process would be such that the resulting frequencies would be lower than expected. The outcome from the iterative model updating process 28 described above are mass values which may be used in subsequent modelling to predict behaviour of the individual blades or the assembly under varying conditions. At present it has been identified that the mass values may be used in at least in any of the following, non-exhaustive list of assessments:
(a) a finite element representation of the blade to predict blade alone properties;
(b) the bladed disc assembly model to predict the behaviour under any user defined forcing conditions;
(c) further studies to predict the effect of any modifications to the system (e.g. additional damping treatment) which may be of interest to investigate;
(d) to determine any modifications needed to achieve an improved assembly response (e.g. to achieve a particular intended mistuned pattern).

The above examples can provide extremely valuable information regarding the behaviour of the assembly or individual components, which allows wider exploration of design choices and thus improved opportunity for optimisation of the individual components and assembly as a whole. For bladed rotors in which the aerodynamic or hydrodynamic performance of the rotor is crucial to correct operation, such as within gas turbine engines, these additional capabilities are of significant value and have been the subject of lengthy studies to date.

The invention may also be a significant enabler for rainbow testing of blade options.

In addition to the above advantages, the invention may allow further advances to prediction code validation and identification of shortcomings or weaknesses thereof. When used in conjunction with laboratory testing, the invention may enable broader, meaningful studies to be carried out. Furthermore the invention offers potential use in equipment health monitoring (EHM) applications in which the invention may provide for early warning of behavioural changes to individual blades through use.

The following description proceeds in relation to an embodiment of an application or use of the above described methods. In such an embodiment, the bladed assembly 2 has been subjected to physical testing so that data indicative of a measured response for the assembly is available.

Once the method described above has been carried out, a computer model of the blade having the appropriate determined artificial parameter values (e.g. the calculated lumped parameter masses) can be output. The lumped parameter masses assigned to each blade within the model can then be used to determine physical changes that can be made to one or more blades 4 or the array 2 as a whole in order improve the vibration response thereof. Such determinations may be made based on a particular strategy dependent upon how it is desirous to improve the operation/characteristics of the array.

In one embodiment, it may be sought to modify one or more blades individually such that the blades in the blade array form a mistuned series or sequence. That is to say each blade may be assigned a blade alone frequency and the array of blades in the bladed array may be arranged such that the blade alone frequencies of the blades are mistuned for the rotor as a whole. For example, the masses and/or locations of the blades in the array may be modified to achieve mistuning.

In one particular example, each blade has a pre-determined blade alone frequency and those blade alone frequencies are arranged to alternate between relatively higher and lower values for the array. For example the first blade in the array may have a frequency of 1 to 100 Hz, whereas the second, adjacent blade may have a frequency of 2 to 105 Hz, and the next blade may have a frequency of 3 - 100 Hz, and so on through the blades in the array. Other cyclic or ordered patterns of blade alone frequencies through the blade array may be applied as required.

A resulting blade alone model may be used to change each blade alone frequency in turn and predict the resulting behaviour. This process can be iterated for a plurality or all of the blades of the rotor until the resulting behaviour/property is as required.

The modification of blades can be achieved by either addition (e.g. hard coating) or removal of material. The addition of material may be achieved by a known coating process, such as for example a hard coating process which makes use of known vapour deposition techniques or equivalents thereof. The removal of material may be achieved for example by a milling or other machining process. Such processes affect the mass and/or stiffness of the blade.

In any of the example modifications to individual blades or the array as a whole, a finite element analysis of the model may be run to predict whether it has had the desired effect. Based on results of such analysis, a solution may be adopted or else a new trial solution can be sought in an iterative manner.

Accordingly, the invention may be used to improve the behaviour of a bladed rotor or else to explore design alternatives which impact on future design iterations. The modifications made to the bladed rotor in this regard may comprise moving the blades within the array (e.g. changing the order of the blades in the array) and/or amending the physical properties of one or more blades (e.g. mass and/or stiffness thereof).

Additional advantages of this invention include that the method is relatively easy for engineers to understand and therefore it can potentially be more effectively used by less skilled personnel. Also, it offers an alternative methodology to existing proprietary methods and therefore provides a useful tool either for analysis of rotors for which existing techniques are less reliable.

This invention stems at least in part from recognition by the inventor of the fact that, although artificial features are applied to the model, it is the frequency characteristic of each blade relative to each other which is important in mistuning behaviour and that the proposed model updating strategy therefore provides an adequate model to describe this global behaviour.

The use of such an artificial feature is in direct contrast to conventionally understood best practice in which a model would be updated to mimic the real blade characteristics.

The invention provides for an alternative method to the prior art for determining vibration characteristics of a rotor or components thereof, which may be useful in scenarios in which the efficacy of conventional techniques is unknown or insufficient.

In addition to the above described embodiments, the method of the present invention can be extended to compute the damping of the system or damping of individual blades, and also the effective forces on each blade. If overall modal (system) damping is required, then this can be an additional parameter that is added to the list of mass parameters, and iteratively computed in the same way as described above in relation to figure 3 for the vibration response. If individual blade damping is required, then it is necessary to define damping parameters associated with each blade and solve for these too. A simple method of achieving this goal would be to apply a lumped parameter damper acting on each blade.

In a yet further embodiment, it is also possible to introduce unknown discrete forces acting on each blade and solve for these too using the same process.

In principle the method of the invention could be applied to any notionally cyclically symmetric structure in which small changes in any of the sectors or components thereof can cause significant changes to the assembly responses. The effective application of the invention to such general rotor assemblies could be applied by the skilled person based on the above description by making routine modifications to the updating and optimisation approaches without any significant modification of the underlying process.

## Claims

1. A method of analysing a vibration characteristic of a rotor having a plurality of components, the method comprising:
generating a computational model of the rotor by discretization of the rotor geometry and assigning parameter values representative of a plurality of physical characteristics of the rotor;
applying an artificial localised parameter value to each component of the rotor;
calculating a vibration response of the rotor for said applied artificial parameters; and,
comparing the vibration response of the rotor against a measured vibration response so as to determine artificial parameter values for each of the components which result in a calculated vibration response which approximates or matches the measured vibration response; and determining individual vibration characteristics of each component upon the output component models and associated artificial parameter features by constraining components or sections of the resulting updated rotor model or isolating a portion of the model representative of each component and constraining it as required and predicting the vibration response and/or characteristics thereof, wherein the artificial localised parameter value applied to each component of the rotor is such that it departs from the physical characteristics of said rotor.

2. A method according to claim 1, wherein the artificial parameter feature comprises one or more of an artificial mass, a spring element and a damping parameter.

3. A method according to any preceding claim, wherein the determining of the artificial parameter value comprises determining a discrepancy between the calculated vibration response and the measured vibration response, and wherein the determining of the artificial parameter value comprises comparing the discrepancy to a threshold discrepancy and accepting the artificial parameter values if the discrepancy falls within the threshold discrepancy.

4. A method according to claim 3, comprising comparing the discrepancy to a threshold discrepancy and, in the event that the discrepancy falls outside of the threshold discrepancy, iteratively updating the artificial parameter values, recalculating the vibration response and determining a discrepancy between the recalculated vibration response and measured vibration response.

5. A method according to any one of claims 3 or 4 comprising determining the sensitivity of the calculated vibration response or discrepancy to the value of the artificial parameter feature and updating the value of the artificial parameter feature based upon said sensitivity.

6. A method according to any preceding claim comprising repeating the determination of a value of the artificial parameter feature for each component.

7. A method according to any preceding claim, wherein the generating a computational model comprises generation or importing of a finite element model.

8. A method according to any preceding claim, comprising amending one or more further parameter values to accommodate the localised artificial parameter feature, and wherein the one or more further parameter values may comprise a density or modulus value for each blade.

9. A method according to any preceding claim, wherein the artificial parameter value for a first component of the rotor differs from the artificial parameter for a second or further component of the rotor.

10. A method according to any preceding claim wherein obtaining said measured vibration response comprises taking physical measurements of the vibration response for a rotor sharing the same geometry as that of the computational model.

11. A method according to any preceding claim, wherein the determining of the artificial parameter values comprises iteratively adjusting the artificial parameter values and calculating an updated vibration profile to be compared with said measured vibration profile for each iteration.

12. A method according to any preceding claim, wherein a value for the artificial parameter is applied to a corresponding specified location on each component and wherein a value for the artificial parameter may be applied to a point location or finite element on each component.

13. A method according to claim 1 comprising resolving vibration behaviour of a rotor assembly having a plurality of components, the method comprising:
obtaining a measured vibration response for the rotor;
generating a computational model of the rotor by discretization of the rotor geometry and assigning parameter values representative of a plurality of physical characteristics of the rotor;
applying a localised artificial parameter feature to each component of the rotor such that the parameter value for said artificial parameter for each component departs from the physical characteristics of said rotor;
calculating a vibration response for the rotor or component thereof for said applied artificial parameter features;
comparing the calculated vibration response against the measured vibration response so as to determine a value of the artificial parameter feature which results in a calculated vibration response that matches the measured vibration response;
determining individual vibration characteristics of each component based upon the output component models and associated artificial parameters by constraining components or sections of the resulting updated rotor model or isolating a portion of the model representative of each component and constraining it as required and predicting the vibration response and/or characteristics thereof; and,
modifying one or more components of the rotor in dependence on the determined artificial parameter values, wherein the artificial localised parameter value applied to each component of the rotor is such that it departs from the physical characteristics of said rotor.

14. A data carrier comprising machine readable instructions for operation of one or more computer processors to carry out the method of claim 1.

## Patentansprüche

1. Verfahren zur Analyse einer Schwingungscharakteristik eines Rotors, der eine Vielzahl von Komponenten aufweist, wobei das Verfahren Folgendes umfasst:
Erzeugen eines Rechner-Modells des Rotors durch Diskretisieren der Rotor-Geometrie und durch Zuordnen von Parameter-Werten, die eine Vielzahl von physikalischen Eigenschaften des Rotors darstellen;
Anwenden eines künstlichen lokalisierten Parameter-Wertes auf jede Komponente des Rotors;
Berechnen eines Schwingungs-Ansprechverhaltens des Rotors für die angewandten künstlichen Parameter; und
Vergleichen des Schwingungs-Ansprechverhaltens des Rotors mit einem gemessenen Schwingungs-Ansprechverhalten, um künstliche Parameter-Werte für jede der Komponenten zu bestimmen, die zu einem berechneten Schwingungs-Ansprechverhalten führen, das dem gemessenen Schwingungs-Ansprechverhalten angenähert ist oder mit diesem übereinstimmt; und
Bestimmen einzelner Schwingungscharakteristiken jeder der Komponenten auf die Ausgangs-Komponenten-Modelle und zugehörigen künstlichen Parameter-Merkmale durch Beschränken von Komponenten oder Abschnitten des resultierenden aktualisierten Rotor-Modells oder durch Isolieren eines Teils des Modells, das jede Komponente darstellt, und dessen Beschränkung in der erforderlichen Weise, und Vorhersagen eines Schwingungs-Ansprechverhaltens und/oder Charakteristiken hiervon, wobei der künstliche lokalisierte Parameter-Wert, der auf jede Komponente des Rotors angewandt wird, derart ist, dass er von den physikalischen Eigenschaften des Rotors abweicht.

2. Verfahren nach Anspruch 1, bei dem das künstliche Parameter-Merkmal eines oder mehrere von einer künstlichen Masse, einem Federelement und einem Dämpfungs-Parameter umfasst.

3. Verfahren nach einem der vorhergehenden Ansprüche, bei dem die Bestimmung des künstlichen Parameter-Wertes die Bestimmung einer Diskrepanz zwischen dem berechneten Schwingungs-Ansprechverhalten und dem gemessenen Schwingungs-Ansprechverhalten umfasst, und bei dem die Bestimmung des künstlichen Parameter-Wertes den Vergleich der Diskrepanz mit einer Schwellenwert-Diskrepanz und das Akzeptieren der künstlichen Parameter-Werte umfasst, wenn die Diskrepanz innerhalb der Schwellenwert-Diskrepanz liegt.

4. Verfahren nach Anspruch 3, das den Vergleich der Diskrepanz mit einer Schwellenwert-Diskrepanz und, in dem Fall, dass die Diskrepanz außerhalb der Schwellenwert-Diskrepanz liegt, iteratives Aktualisieren der künstlichen Parameter-Werte, erneutes Berechnen des Schwingungs-Ansprechverhaltens und Bestimmen der Diskrepanz zwischen dem neu berechneten Schwingungs-Ansprechverhalten und dem gemessenen Schwingungs-Ansprechverhalten umfasst.

5. Verfahren nach einem der Ansprüche 3 oder 4, das die Bestimmung der Empfindlichkeit des berechneten Schwingungs-Ansprechverhaltens oder der Diskrepanz auf den Wert des künstlichen Parameter-Merkmals und die Aktualisierung des Wertes des künstlichen Parameter-Merkmals auf der Grundlage dieser Empfindlichkeit umfasst.

6. Verfahren nach einem der vorhergehenden Ansprüche, das die Wiederholung der Bestimmung eines Wertes für das künstliche Parameter-Merkmal für jede Komponente umfasst.

7. Verfahren nach einem der vorhergehenden Ansprüche, bei dem die Erzeugung eines Rechner-Modells die Erzeugung oder den Import eines Finite-Elemente-Modells umfasst.

8. Verfahren nach einem der vorhergehenden Ansprüche, das die Änderung eines oder mehrerer weiterer Parameter-Werte zur Berücksichtigung des lokalisierten künstlichen Parameter-Merkmals umfasst, und bei dem der eine oder mehrere der weiteren Parameter-Werte einen Dichte- oder Modulus-Wert für jede Schaufel umfassen kann.

9. Verfahren nach einem der vorhergehenden Ansprüche, bei dem sich der künstliche Parameter-Wert für eine erste Komponente des Rotors von dem künstlichen Parameter für eine zweite oder weitere Komponente des Rotors unterscheidet.

10. Verfahren nach einem der vorhergehenden Ansprüche, bei dem die Gewinnung des gemessenen Schwingungs-Ansprechverhaltens physikalische Messungen des Schwingungs-Ansprechverhaltens für einen Rotor umfasst, der die gleiche Geometrie wie die des Rechner-Modells aufweist.

11. Verfahren nach einem der vorhergehenden Ansprüche, bei dem die Bestimmung der künstlichen Parameter-Werte das iterative Abgleichen der künstlichen Parameter-Werte und die Berechnung eines aktualisierten Schwingungsprofils, das mit dem gemessenen Schwingungsprofil zu vergleichen ist, für jede Iteration umfasst.

12. Verfahren nach einem der vorhergehenden Ansprüche, bei dem ein Wert für den künstlichen Parameter auf eine entsprechende spezifizierte Position auf jeder Komponente angewandt wird, und bei dem ein Wert für den künstlichen Parameter auf eine Punkt-Position oder ein finites Element auf jeder Komponente angewandt werden kann.

13. Verfahren nach Anspruch 1, das die Auflösung des Schwingungsverhaltens einer Rotorbaugruppe umfasst, die eine Vielzahl von Komponenten aufweist, wobei das Verfahren Folgendes umfasst:
Gewinnen eines gemessenen Schwingungs-Ansprechverhaltens für den Rotor;
Erzeugen eines Rechner-Modells des Rotors durch Diskretisieren der Rotor-Geometrie und Zuordnen von Parameter-Werten, die eine Vielzahl von physikalischen Charakteristiken des Rotors darstellen;
Anwenden eines lokalisierten künstlichen Parameter-Merkmals auf jede Komponente des Rotors derart, dass der Parameter-Wert für den künstlichen Parameter für jede Komponente von den physikalischen Charakteristiken des Rotors abweicht;
Berechnen eines Schwingungs-Ansprechverhaltens für den Rotor oder einer Komponente hiervon für die angewandten künstlichen Parameter-Merkmale;
Vergleichen des berechneten Schwingungs-Ansprechverhaltens mit dem gemessenen Schwingungs-Ansprechverhalten, um einen Wert des künstlichen Parameter-Merkmals zu bestimmen, das zu einem berechneten Schwingungs-Ansprechverhalten führt, das mit dem gemessenen Schwingungs-Ansprechverhalten übereinstimmt;
Bestimmen individueller Schwingungscharakteristiken jeder Komponente auf der Grundlage der Ausgangs-Komponenten-Modelle und der zugehörigen künstlichen Parameter durch Beschränken von Komponenten oder Abschnitten des resultierenden aktualisierten Rotor-Modells oder Isolieren eines Teils des Modells, das jede Komponente darstellt, und durch Beschränken dieses Teils in der erforderlichen Weise, und Vorhersage des Schwingungs-Ansprechverhaltens und/oder der Charakteristiken hiervon; und
Modifizieren einer oder mehrerer Komponenten des Rotors in Abhängigkeit von den bestimmten künstlichen Parameter-Werten, wobei der künstliche lokalisierte Parameter-Wert, der auf jede Komponente des Rotors angewandt wird, derart ist, dass er von den physikalischen Charakteristiken des Rotors abweicht.

14. Datenträger, der maschinenlesbare Befehle für den Betrieb von einem oder mehreren Prozessoren und zur Durchführung des Verfahrens nach Anspruch 1 umfasst.

## Revendications

1. Procédé pour analyser une caractéristique vibratoire d'un rotor ayant une pluralité de composants, le procédé comprenant les étapes consistant à :
générer un modèle informatique du rotor par discrétisation de la géométrie du rotor et attribuer des valeurs de paramètre représentatives d'une pluralité de caractéristiques physiques du rotor ;
appliquer une valeur de paramètre localisé artificiel à chaque composant du rotor ;
calculer une réponse vibratoire du rotor pour lesdits paramètres artificiels appliqués ; et
comparer la réponse vibratoire du rotor à une réponse vibratoire mesurée afin de déterminer les valeurs de paramètre artificiel pour chacun des composants qui se traduisent par une réponse vibratoire calculée qui se rapproche ou correspond à la réponse vibratoire mesurée ; et déterminer des caractéristiques vibratoires individuelles pour chaque composant sur les modèles de composant de sortie et des caractéristiques de paramètre artificiel associées en contraignant des composants ou sections du modèle de rotor mis à jour résultant ou en isolant une partie du modèle représentative de chaque composant et en la contraignant si nécessaire et en prévoyant la réponse vibratoire et/ou ses caractéristiques, dans lequel la valeur de paramètre localisé artificiel appliquée à chaque composant du rotor est telle qu'elle s'éloigne des caractéristiques physiques dudit rotor.

2. Procédé selon la revendication 1, dans lequel la caractéristique de paramètre artificiel comprend un ou plusieurs parmi une masse artificielle, un élément de ressort et un paramètre d'amortissement.

3. Procédé selon l'une quelconque des revendications précédentes, dans lequel l'étape consistant à déterminer la valeur de paramètre artificiel comprend l'étape consistant à déterminer un écart entre la réponse vibratoire calculée et la réponse vibratoire mesurée, et dans lequel l'étape consistant à déterminer la valeur de paramètre artificiel comprend l'étape consistant à comparer l'écart à un écart de seuil et l'étape consistant à accepter les valeurs de paramètre artificiel si l'écart chute dans les limites de l'écart de seuil.

4. Procédé selon la revendication 3, comprenant les étapes consistant à comparer l'écart à un écart de seuil et, dans le cas dans lequel l'écart chute hors des limites de l'écart de seuil, mettre à jour de manière itérative les valeurs de paramètre artificiel, recalculer la réponse vibratoire et déterminer un écart entre la réponse vibratoire recalculée et la réponse vibratoire mesurée.

5. Procédé selon l'une quelconque des revendications 3 à 4, comprenant l'étape consistant à déterminer la sensibilité de la réponse vibratoire calculée ou l'écart par rapport à la valeur de la caractéristique de paramètre artificiel et mettre à jour la valeur de la caractéristique de paramètre artificiel en fonction de ladite sensibilité.

6. Procédé selon l'une quelconque des revendications précédentes, comprenant l'étape consistant à répéter la détermination d'une valeur de la caractéristique de paramètre artificiel pour chaque composant.

7. Procédé selon l'une quelconque des revendications précédentes, dans lequel la génération d'un modèle informatique comprend la génération ou l'importation d'un modèle d'élément limité.

8. Procédé selon l'une quelconque des revendications précédentes, comprenant l'étape consistant à corriger une ou plusieurs autres valeurs de paramètre pour accepter la caractéristique de paramètre artificiel localisé, et dans lequel les une ou plusieurs autres valeurs de paramètre peuvent comprendre une densité ou valeur de module pour chaque lame.

9. Procédé selon l'une quelconque des revendications précédentes, dans lequel la valeur de paramètre artificiel pour un premier composant du rotor diffère du paramètre artificiel pour un second composant ou composant supplémentaire du rotor.

10. Procédé selon l'une quelconque des revendications précédentes, dans lequel l'étape consistant à obtenir ladite réponse vibratoire mesurée comprend l'étape consistant à prendre des mesures physiques de la réponse vibratoire pour un rotor partageant la même géométrie que celle du modèle informatique.

11. Procédé selon l'une quelconque des revendications précédentes, dans lequel l'étape consistant à déterminer les valeurs de paramètre artificiel comprend les étapes consistant à ajuster de manière itérative les valeurs de paramètre artificiel et calculer un profil vibratoire mis à jour à comparer avec ledit profil vibratoire mesuré pour chaque itération.

12. Procédé selon l'une quelconque des revendications précédentes, dans lequel une valeur pour le paramètre artificiel est appliquée à un emplacement spécifié correspondant sur chaque composant et dans lequel une valeur pour le paramètre artificiel peut être appliquée sur un emplacement ponctuel ou élément limité sur chaque composant.

13. Procédé selon la revendication 1, comprenant la résolution du comportement vibratoire d'un ensemble de rotor ayant une pluralité de composants, le procédé comprenant les étapes consistant à :
obtenir une réponse vibratoire mesurée pour le rotor ;
générer un modèle informatique du rotor par discrétisation de la géométrie du rotor et attribuer des valeurs de paramètre représentatives d'une pluralité de caractéristiques physiques du rotor ;
appliquer une caractéristique de paramètre artificiel à chaque composant du rotor de sorte que la valeur de paramètre pour ledit paramètre artificiel pour chaque composant s'éloigne des caractéristiques physiques dudit rotor ;
calculer une réponse vibratoire pour le rotor ou son composant pour lesdites caractéristiques de paramètre artificiel appliquées ;
comparer la réponse vibratoire calculée à la réponse vibratoire mesurée afin de déterminer une valeur de la caractéristique de paramètre artificiel qui se traduit par une réponse vibratoire calculée qui correspond à la réponse vibratoire mesurée ;
déterminer des caractéristiques vibratoires individuelles de chaque composant en fonction des modèles de composant de sortie et des paramètres artificiels associés en contraignant des composants ou des sections du modèle de rotor mis à jour résultant ou en isolant une partie du modèle représentative de chaque composant et en la contraignant si nécessaire et en prévoyant la réponse vibratoire et/ou ses caractéristiques ; et modifier un ou plusieurs composants du rotor en fonction des valeurs de paramètre artificiel déterminées, dans lequel la valeur de paramètre localisé artificiel appliquée à chaque composant du rotor est telle qu'elle s'éloigne des caractéristiques physiques dudit rotor.

14. Support de données comprenant des instructions lisibles par machine pour faire fonctionner un ou plusieurs processeurs informatiques afin de réaliser le procédé selon la revendication 1.
